# EUROPÄISCHE PATENTSCHRIFT

(11) **EP 1 827 167 B1**
(45) Veröffentlichungstag und Bekanntmachung des Hinweises auf die Patenterteilung: **04.05.2011**
(21) Anmeldenummer: 05819404.4
(22) Anmeldetag: 16.12.2005
(51) Int. Cl.: A46B 15/00

(54) **AUSWECHSELBARES ZUBEHÖRTEIL FÜR EIN ELEKTROKLEINGERÄT UND VERFAHREN ZUM BESTIMMEN DER BENUTZUNGSDAUER DES ZUBEHÖRTEILS**
REPLACEABLE ACCESSORY FOR A SMALL-SCALE ELECTRICAL UNIT, AND METHOD FOR DETERMINING THE PERIOD OF USE THEREOF
ACCESSOIRE INTERCHANGEABLE POUR PETIT APPAREIL ELECTRIQUE, ET PROCEDE PERMETTANT DE DETERMINER LA DUREE D'UTILISATION DE CET ACCESSOIRE

(30) Priorität: 23.12.2004 DE 102004062150
(43) Veröffentlichungstag der Anmeldung: 05.09.2007
(73) Patentinhaber: Braun GmbH, 61476 Kronberg (DE)
(72) Erfinder: NEYER, Christian, 65760 Eschborn (DE)
(86) Internationale Anmeldenummer: PCT/EP2005/013559
(87) Internationale Veröffentlichungsnummer: WO 2006/069644

(56) Entgegenhaltungen:
- EP-A- 0 634 151
- DE-A1- 10 026 513
- DE-A1- 10 247 698
- DE-A1- 19 506 129
- DE-U1- 29 915 858
- US-A- 4 698 869
- US-A- 5 930 858
- US-A- 6 029 303
- US-A- 6 081 957
- US-A1- 2002 088 068
- US-A1- 2004 134 000

## Beschreibung

Die Erfindung betrifft von Zeit zu Zeit auszuwechselnde Zubehörteile für Elektrokleingeräte, beispielsweise Aufsteckbürsten für elektrische Zahnbürsten oder Scherteile für elektrische Rasierapparate, sowie ein Verfahren zum Bestimmen der Benutzungsdauer oder des Endes der Benutzungsdauer (Verschleißgrenze) des Zubehörteils.

Aus der WO 03/054771 A1 ist eine elektrische Zahnbürste bekannt, die aus einem Handstück und einer auswechselbaren Aufsteckbürste besteht. In der Aufsteckbürste befindet sich ein Speicher, in dem eine die Aufsteckbürste identifizierende Information gespeichert ist. In der Aufsteckbürste ist ferner ein Transponder vorhanden, der die im Speicher gespeicherte Information ausgibt, wenn er von einer Abfragestation ein Abfragesignal erhält. Im Handstück befindet sich ein Mikrokontroller, der die kumulierte Benutzungsdauer der identifizierten Aufsteckbürste berechnen und in den Speicher der Aufsteckbürste schreiben kann. Das Handstück ist ferner mit einer Anzeige versehen, mit der die Notwendigkeit des Auswechselns einer Aufsteckbürste angezeigt werden kann.

Aus der DE 102 47 698 A1 ist eine elektrische Zahnbürste bekannt, die aus einem Griffelement und einem auswechselbaren Borstenkopfs besteht. Das Griffelement ist mit einem Display versehen, auf dem das Benutzungsende des Borstenkopfs angezeigt werden kann.

Der Erfindung liegt die Aufgabe zugrunde, ein Zubehörteil für ein Elektrokleingerät anzugeben, das ein einfaches Bestimmen der Benutzungsdauer des Zubehörteils ermöglicht, sowie ein einfaches Verfahren zum Bestimmen der Benutzungsdauer des Zubehörteils.

Die Lösung dieser Aufgabe gelingt mit einem Zubehörteil gemäß Anspruch 1.

Der im Datenspeicher gespeicherte Wert ist beispielsweise ein Zählerstand, der beispielsweise der kumulierten Benutzungsdauer des Zubehörteils entspricht. Geht man von einer bestimmten maximalen Benutzungsdauer des Zubehörteils aus, kann aber auch die noch verbleibende Benutzungsdauer, das Ende der Benutzungsdauer oder eine relative Benutzungsdauer gespeichert werden, die auf die maximale Benutzungsdauer bezogen ist. Ein derartiges Zubehörteil hat den Vorteil, daß die Benutzungsdauer im Zubehörteil selbst gespeichert ist, d.h. das Elektrokleingerät keine Zuordnung zwischen verschiedenen Zubehörteilen und deren jeweiliger Benutzungsdauer treffen muß. Dieser Vorteil ist bei einer elektrischen Zahnbürste besonders bedeutsam, deren Handstück von mehreren Familienmitgliedern benutzt wird, wobei jedes Familienmitglied jedoch seine eigene Aufsteckbürste aufsteckt, oder wenn ein Handstück mit unterschiedlichen Aufsteckbürsten betrieben wird, beispielsweise einer Reinigungsbürste und einer Massagebürste.

Ein mit dem Zubehörteil zusammenwirkendes Elektrokleingerät weist vorzugsweise eine an sich bekannte Sende- und Empfangseinrichtung auf, mit der ein Abfragesignal gesendet und ein vom Transponder des Zubehörteils zurückgesendetes Signal empfangen werden kann. Auf diese Weise können beispielsweise die im Datenspeicher des Zubehörteils gespeicherten Daten verändert, ausgelesen und/oder auf einer Anzeigevorrichtung angezeigt werden. Die Datenübertragung zwischen Elektrokleingerät und Zubehörteil kann beispielsweise durch Hochfrequenzsignale erfolgen, die vorzugsweise induktiv übertragen werden. Da das Zubehörteil keine eigene Stromversorgung hat, wird der Transponder und die elektronische Schaltung mit einer Versorgungsspannung betrieben, die aus dem vom Elektrokleingerät erzeugten Hochfrequenzfeld gewonnen wird.

Das Zubehörteil verwendet als Signal für das Verändern des gespeicherten Werts einfach die sich immer dann im Transponder aufbauende Versorgungsspannung, wenn das Zubehörteil in den Sendebereich des Elektrokleingeräts gelangt, d.h. an dieses angekoppelt wird, oder das Elektrokleingerät mit angekoppeltem Zubehörteil eingeschaltet wird. Auf diese Weise ergibt sich ein einfacher Benutzungszähler, der die Anzahl der Benutzungen registriert.

Eine andere Ausführung eines Zubehörteils verwendet zum Verändern des gespeicherten Werts Signale, die das Elektrokleingerät während des Betriebs beispielsweise im Sekundentakt sendet. Auf diese Weise ergibt sich ein einfacher Benutzungszähler, der sekundengenau die Betriebszeit des Zubehörteils registriert.

Bei einer bevorzugten Ausführung eines erfindungsgemäßen Zubehörteils zählt die elektronische Schaltung im Zubehörteil nach jedem Einschalten des Elektrokleingeräts bzw. Empfang eines entsprechenden Signals den im Datenspeicher gespeicherten Zählerstand um einen Schritt herauf, bis ein maximaler Wert erreicht ist. Der Zählerstand kann aber auch von einem vorgegebenen Wert aus abwärts gezählt werden. Das Ende der Lebensdauer des Zubehörteils kann dann am Erreichen des Zählerstands NULL erkannt werden. Der jeweilige Zählerstand wird vom Transponder zum Elektrokleingerät übertragen. Der Zählerstand ist mindestens zweifach, d.h. in zwei Speicherzellen, im Zubehörteil gespeichert.

Bei jeder Veränderung des im Datenspeicher gespeicherten Werts muß die elektronische Schaltung den aktuellen Wert des Datenspeichers auslesen, den Wert verändern und ihn dann in den Datenspeicher zurückschreiben. Vorzugsweise wird als Datenspeicher ein nichtflüchtiger Speicher, beispielsweise ein EEPROM verwendet. Bei einem EEPROM dauert das Beschreiben einer Speicherzelle mehrere Millisekunden, wobei üblicherweise vor dem Neubeschreiben zuerst alle Bits in der Speicherzelle auf NULL gesetzt werden. Fällt die Stromversorgung, also beispielsweise das Hochfrequenzfeld aus dem die elektronische Schaltung ihre Energie bezieht, gerade während dieser Zeit aus, so wird der Schreibvorgang zwangsläufig abgebrochen. Dies hat dann zur Folge, daß ein unsinniger Wert im Speicher steht oder der Speicherinhalt verlorengeht.

Als Grund für einen Ausfall des Hochfrequenzfeldes ist vor allem denkbar, daß der Benutzer das Elektrokleingerät wieder ausschaltet oder das Zubehörteil auswechselt und daher vom Elektrokleingerät entfernt, oder daß der Akku oder die Batterie des Elektrokleingeräts leer ist oder eine zu geringe Spannung für den Aufbau des Hochfrequenzfeldes liefert. Die Wahrscheinlichkeit dafür, daß das Hochfrequenzfeld gerade in dem kurzen Zeitintervall ausfällt, wenn der Datenspeicher beschrieben wird, mag gering sein. Wird das Zubehörteil jedoch, wie vorgesehen, häufig benutzt, so steigt die Wahrscheinlichkeit für einen Verlust des Speicherinhalts im Datenspeicher auf einen störenden Wert an.

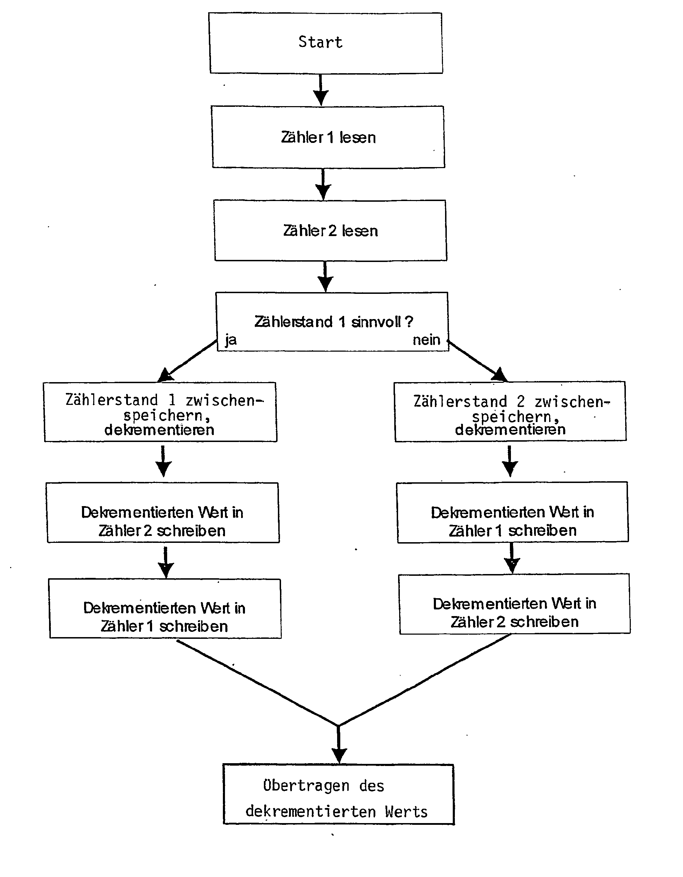

Das erfindungsgemäße Verfahren zum Bestimmen der Benutzungsdauer oder des Endes der Benutzungsdauer des Zubehörteils basiert auf folgenden Grundgedanken:
Der Zählerstand des Benutzungszählers muß zu jedem Zeitpunkt in einem nichtflüchtigen Datenspeicher stehen. Nur so ist gewährleistet, daß er nicht verloren gehen kann. Daher weist der Datenspeicher mindestens zwei Speicherzellen auf, in denen jeweils ein Zählerstand gespeichert ist. Ein geeigneter Datenspeicher ist beispielsweise ein EEPROM. Bei einem noch unbenutzten Zubehörteil steht in beiden Speicherzellen beispielsweise ein maximaler Wert oder NULL. Außerdem ist in jeder Speicherzelle noch eine Kennung gespeichert, anhand derer die elektronische Schaltung erkennen kann, ob in der Speicherzelle ein richtiger oder sinnvoller Wert steht oder nicht. Diese Kennung kann beispielsweise durch ein Zusatzbit realisiert sein, das in an sich bekannter Weise zusammen mit dem jeweiligen Zählerstand in der Speicherzelle gespeichert wird. Soll ein sinnvoller Wert in der einen Speicherzelle verändet werden, wird er erst dann mit dem veränderten Wert überschrieben, wenn sicher ist, daß sich in der anderen Speicherzelle auch ein sinnvoller Wert befindet.
Das erfindungsgemäße Verfahren wird nachfolgend anhand eines Ausführungsbeispiels erläutert, dessen Ablaufdiagramm in der Figur dargestellt ist.

Nachdem der Transponder ein entsprechendes Signal, d.h. zumindest eine Versorgungsspannung, an die elektronische Schaltung geliefert hat, liest die elektronische Schaltung den Zählerstand in der ersten und zweiten Speicherzelle aus, und stellt anhand der Kennung fest, ob sich in der ersten Speicherzelle ein sinnvoller Wert befindet. Ist dies der Fall, wird der Zählerstand der ersten Speicherzelle in einen Zwischenspeicher geladen und beispielsweise um 1 heruntergezählt. Dann wird der dekrementierte Zählerstand zuerst in der zweiten Speicherzelle und danach in der ersten Speicherzelle gespeichert. Ist in der ersten Speicherzelle jedoch kein sinnvoller Wert vorhanden, wird der Zählerstand der zweiten Speicherzelle in den Zwischenspeicher geladen und um 1 heruntergezählt. Dann wird der dekrementierte Zählerstand zuerst in der ersten Speicherzelle und danach in der zweiten Speicherzelle gespeichert. Danach wird der neue Zählerstand vom Transponder an das Elektrokleingerät übertragen. Bei diesem Verfahrensablauf ist sichergestellt, daß am Ende in beiden Speicherzellen ein sinnvoller Wert gespeichert ist, sofern zu Beginn des Verfahrensablaufs in einer der beiden Speicherzellen ein sinnvoller Wert vorhanden war. Sollte während des Verfahrensablaufs die Versorgungsspannung des Zubehörteils ausfallen, ist zumindest in einer der beiden Speicherzellen immer noch ein sinnvoller Wert gespeichert.

Das Elektrokleingerät kann den empfangenen neuen Zählerstand auf einer Anzeigeeinrichtung anzeigen, die beispielsweise die noch verbleibende Anzahl von Benutzungen des Zubehörteils vor einem erforderlichen Austausch anzeigt oder die erst dann die Anzeigeeinrichtung aktiviert, wenn der Zählerstand NULL übertragen wurde und somit das Zubehörteil verschlissen ist und ausgetauscht werden sollte.

## Patentansprüche

1. Zubehörteil für ein Elektrokleingerät, beispielsweise Aufsteckbürste für eine elektrische Zahnbürste oder Scherteil für einen elektrischen Rasierapparat, mit einem Datenspeicher und einem Transponder, wobei das Zubehörteil ferner eine elektronische Schaltung aufweist, die einen im Datenspeicher gespeicherten Wert immer dann verändert, wenn sie ein entsprechendes Signal vom Elektrokleingerät empfängt; **dadurch gekennzeichnet, dass** das Zubehörteil keine eigene Stromversorgung hat und das Signal für das Verändern des gespeicherten Werts eine sich im Transponder aufbauende Versorgungsspannung ist.

2. Zubehörteil nach Anspruch 1, **dadurch gekennzeichnet, daß** die elektronische Schaltung den im Datenspeicher gespeicherten Wert immer dann verändert, wenn sie eingeschaltet wird.

3. Zubehörteil nach Anspruch 1 oder 2, **dadurch gekennzeichnet, daß** der im Datenspeicher gespeicherte Wert ein Zählerstand ist, der der Benutzungsdauer des Zubehörteils entspricht.

4. Zubehörteil nach Anspruch 3, **dadurch gekennzeichnet, daß** nach jedem Einschalten bzw. Empfang eines entsprechenden Signals die elektronische Schaltung den Zählerstand um einen Schritt herauf- oder herunterzählt, sofern ein maximaler bzw. minimaler Wert noch nicht erreicht ist.

5. Zubehörteil nach Anspruch 1 oder 4, **dadurch gekennzeichnet, daß** die elektronische Schaltung den veränderten Wert im Datenspeicher speichert.

6. Zubehörteil nach einem der vorhergehenden Ansprüche, **dadurch gekennzeichnet, daß** der Datenspeicher ein EEPROM-Speicher mit mindestens zwei Speicherzellen ist, in dem der Zählerstand mindestens zweifach speicherbar ist.

7. Verfahren zum Bestimmen der Benutzungsdauer eines Zubehörteils für ein Elektrokleingerät, wobei das Zubehörteil einen Datenspeicher und einen Transponder aufweist, wobei der im Datenspeicher gespeicherte Wert immer dann verändert wird, wenn das Zubehörteil ein entsprechendes Signal vom Elektrokleingerät empfängt. **dadurch gekennzeichnet**, das das Zubehörteil keine eigene Stromversorgung hat und das Signal für das Verändern des gespeicherten Werts eine sich im Transponder aufbauende Versorgungsspannung ist.

8. Verfahren nach Anspruch 7, **dadurch gekennzeichnet, daß** im Datenspeicher mindestens zwei mit je einer Kennung versehene Werte gespeichert sind, die der Benutzungsdauer des Zubehörteils entsprechen, daß anhand der Kennung ermittelt wird, ob einer der beiden gespeicherten Werte sinnvoll ist, daß die gespeicherten Werte durch veränderte Werte ersetzt werden, wenn das Zubehörteil benutzt wird, wobei erst dann ein gespeicherter Wert mit einem veränderten Wert überschrieben wird, wenn sicher ist, daß der andere gespeicherte Wert ein sinnvoller Wert ist.

9. Verfahren nach Anspruch 8, **dadurch gekennzeichnet, daß** der gespeicherte Wert vom Transponder an das Elektrokleingerät übertragen wird.

10. Aufsteckbürste für eine elektrische Zahnbürste, **gekennzeichnet durch** eine Ausbildung als Zubehörteil nach einem der Ansprüche 1 bis 6.

11. Elektrische Zahnbürste mit einer Aufsteckbürste gemäß Anspruch 10.

## Claims

1. An accessory for a small electric appliance, for example a brush attachment for an electric toothbrush or a shaver part for an electric shaver, comprising a data memory and a transponder, wherein the accessory also has an electronic circuit which modifies a value stored in the data memory whenever it receives a corresponding signal from the small electric appliance, **characterized in that** the accessory does not have its own power supply and the signal for the modification of the stored value is a supply voltage building up in the transponder.

2. The accessory according to Claim 1, **characterized in that** the electronic circuit modifies the value stored in the data memory whenever it is turned on.

3. The accessory according to Claim 1 or 2, **characterized in that** the value stored in the data memory is a counter reading which corresponds to the operating time of the accessory.

4. The accessory according to Claim 3, **characterized in that** the electronic circuit moves the counter reading up or down by one each time after it is turned on or receives a corresponding signal, as long as a maximum or minimum value has not yet been reached.

5. The accessory according to Claim 1 or 4, **characterized in that** the electronic circuit stores the modified value in the data memory.

6. The accessory according to any one of the preceding claims, **characterized in that** the data memory is an EEPROM memory having at least two memory cells, in which EEPROM memory the counter reading can be stored at least twice.

7. A method for determining the operating time of an accessory for a small electric appliance, wherein the accessory comprises a data memory and a transponder, wherein the value stored in the data memory is modified whenever the accessory receives a corresponding signal from the small electric appliance, **characterized in that** the accessory does not have its own power supply and the signal for the modification of the stored value is a supply voltage building up in the transponder.

8. The method according to Claim 7, **characterized in that** the data memory stores at least two values, each provided with an identifier, which correspond to the operating time of the accessory, that, by means of the identifier, it is determined whether one of the two stored values is meaningful, that the stored values are replaced by modified values when the accessory is used, wherein a stored value is only overwritten with a modified value once it is certain that the other stored value is a meaningful value.

9. The method according to Claim 8, **characterized in that** the stored value is transmitted from the transponder to the small electric appliance.

10. A brush attachment for an electric toothbrush, **characterized by** a design as an accessory according to any one of Claims 1 to 6.

11. An electric toothbrush having a brush attachment according to Claim 10.

## Revendications

1. Accessoire pour un petit appareil électrique, par exemple brosse amovible pour une brosse à dents électrique ou pièce de rasage pour un rasoir électrique, doté d'une mémoire de données et d'un transpondeur, l'accessoire présentant en outre une commande électronique qui modifie une valeur enregistrée dans la mémoire de données à chaque fois qu'elle reçoit un signal correspondant du petit appareil électrique ; **caractérisé en ce que** l'accessoire ne dispose pas d'une alimentation en courant propre et le signal pour la modification de la valeur enregistrée est une tension d'alimentation s'établissant dans le transpondeur.

2. Accessoire selon la revendication 1, **caractérisé en ce que** la commande électronique modifie la valeur enregistrée dans la mémoire de données à chaque fois qu'elle est activée.

3. Accessoire selon la revendication 1 ou 2, **caractérisé en ce que** la valeur enregistrée dans la mémoire de données est une position de compteur qui correspond à la durée d'utilisation de l'accessoire.

4. Accessoire selon la revendication 3, **caractérisé en ce qu'**après chaque activation ou chaque réception d'un signal correspondant, la commande électronique augmente ou diminue la position du compteur d'un incrément, pour autant qu'une valeur maximale ou minimale ne soit pas encore atteinte.

5. Accessoire selon la revendication 1 ou 4, **caractérisé en ce que** la commande électronique enregistre la valeur modifiée dans la mémoire de données.

6. Accessoire selon l'une des revendications précédentes, **caractérisé en ce que** la mémoire de données est une mémoire EEPROM dotée d'au moins deux cellules de mémoire, dans laquelle la position du compteur peut être enregistrée au moins deux fois.

7. Procédé de détermination de la durée d'utilisation d'un accessoire pour un petit appareil électrique, l'accessoire présentant une mémoire de données et un transpondeur, la valeur enregistrée dans la mémoire de données étant modifiée à chaque fois que l'accessoire reçoit un signal correspondant du petit appareil électrique, **caractérisé en ce que** l'accessoire ne dispose pas d'une alimentation en courant propre et le signal pour la modification de la valeur enregistrée est une tension d'alimentation s'établissant dans le transpondeur.

8. Procédé selon la revendication 7, **caractérisé en ce que** dans la mémoire de données sont enregistrées au moins deux valeurs pourvues chacune d'un identifiant, qui correspondent à la durée d'utilisation de l'accessoire, **en ce qu'**à l'aide de l'identifiant, on détermine si une des deux valeurs enregistrées est significative, **en ce que** les valeurs enregistrées sont remplacées par des valeurs modifiées lorsque l'accessoire est utilisé, une valeur enregistrée n'étant écrasée par une valeur modifiée que lorsqu'il est certain que l'autre valeur enregistrée est une valeur significative.

9. Procédé selon la revendication 8, **caractérisé en ce que** la valeur enregistrée est transmise par le transpondeur au petit appareil électrique.

10. Brosse amovible pour une brosse à dents électrique, **caractérisée par** une conception comme accessoire selon l'une des revendications 1 à 6.

11. Brosse à dents électrique présentant une brosse amovible selon la revendication 10.
